# EUROPÄISCHE PATENTSCHRIFT

(11) **EP 1 529 818 B1**
(45) Veröffentlichungstag und Bekanntmachung des Hinweises auf die Patenterteilung: **30.09.2015**
(21) Anmeldenummer: 04023767.9
(22) Anmeldetag: 06.10.2004
(51) Int. Cl.: C09C 1/48

(54) **Russ**
Carbon black
Noir de carbone

(30) Priorität: 06.11.2003 DE 10351737
(43) Veröffentlichungstag der Anmeldung: 11.05.2005
(73) Patentinhaber: Orion Engineered Carbons GmbH, 60528 Frankfurt am Main (DE)
(72) Erfinder: Krauss, Kai, Dr., 50354 Hürht (DE); Karl, Alfons, Dr., 63584 Gründau (DE); Freund, Burkhard, Dr., 50374 Erfstadt (DE); Mangold, Helmut, Dr., 63517 Rodenbach (DE); Wieschnowsky, Udo, Dr., 26101 Parkersburg WV (US); Schumacher, Kai, Dr., 65719 Hofheim (DE); Golchert, Rainer, 64807 Dieburg (DE); Roth, Helmut, 63814 Mainaschaff (DE)
(74) Vertreter: f & e patent

(56) Entgegenhaltungen:
- EP-A- 1 233 042
- DE-A1- 2 403 545
- US-A- 6 159 275
- US-B1- 6 231 624

## Beschreibung

Die Erfindung betrifft einen Ruß, ein Verfahren zu seiner Herstellung sowie seine Verwendung.

Aus DE 19650500 sind dotierte, pyrogen hergestellte Oxide von Metallen und / oder Metalloxiden, welche mit einer oder mehreren Dotierungskomponenten in einer Menge von 0,00001 bis 20 Gew.-% dotiert sind, bekannt. Die dotierten pyrogen hergestellten Oxide werden hergestellt, indem man bei der Flammenhydrolyse von verdampfbaren Verbindungen von Metallen und / oder Metalloxiden dem Gasgemisch ein Aerosol, welches eine wäßrige Lösung eines Metalls und / oder Metalloxides enthält, zusetzt.

Aus EP1233042, US6231624, US6159275 und DE2403545 sind Furnaceruße mit abgesenkter DBP-Zahl bekannt.

Ferner ist ein Gasruß-Verfahren (DRP 29261, DE-PS 2931907, DE-PS 671739, Carbon Black, Prof. Donnet, 1993 by MARCEL DECCER, INC, New York, Seite 57ff) bekannt, bei dem ein mit Öldämpfen beladenes wasserstoffhaltiges Traggas an zahlreichen Austrittsöffnungen in Luftüberschuss verbrannt wird. Die Flammen schlagen gegen wassergekühlte Walzen, was die Verbrennungsreaktion abbricht. Ein Teil des im Flammeninneren gebildeten Ruß schlägt sich auf den Walzen nieder und wird von diesen abgeschabt. Der im Abgasstrom verbleibende Ruß wird in Filtern abgetrennt.

Ferner ist das Channelruß-Verfahren (Carbon Black, Prof. Donnet, 1993 by MARCEL DECCER, INC, New York, Seite 57ff) bekannt, bei dem eine Vielzahl von Erdgas gespeisten kleinen Flammen gegen wassergekühlte Eisenrinnen (Channels) brennen. Der an den Eisenrinnen abgeschiedene Ruß wird abgeschabt und in einem Trichter aufgefangen.

Die nach diesen Verfahren hergestellten Ruße weisen zahlreiche sauerstofffunktionelle Gruppen an der Oberfläche auf und sind verfahrensbedingt hochstrukturiert, das heißt die Ruße bestehen aus ausgedehnten und verzweigten Aggregaten.

Nachteil der bekannten Ruße ist, daß ihre Struktur verfahrensbedingt sehr hoch ist und keine Möglichkeit besteht, diese direkt im Herstellprozess abzusenken. Aufgabe der vorliegenden Erfindung ist es, einen Ruß zur Verfügung zu stellen, der eine niedrige Struktur aufweist, im Lack eine niedrigere Viskosität und höhere Farbtiefe besitzt und eine höhere Rußkonzentration in Bindemittelsystemen bei gleichbleibender Viskosität, im Vergleich zu nicht strukturabgesenkten Rußen, ermöglicht. Eine weitere Aufgabe der vorliegenden Erfindung ist es, im Rußherstellverfahren die Struktur des Rußes gezielt einzustellen.

Gegenstand der Erfindung ist ein Gasruß oder Channelruß, welcher dadurch gekennzeichnet ist, daß die OAN, gemessen am geperlten Ruß, kleiner 100 ml/100g, ist.

Der Ruß kann eine COAN, gemessen am geperlten Ruß, kleiner 90 ml/100g, vorzugsweise kleiner 85 ml/100g, besonders bevorzugt kleiner 80 ml/100g, besitzen.

Der Ruß kann eine Differenz, gemessen am geperlten Ruß, zwischen OAN und COAN von kleiner 30 ml/100g, vorzugsweise kleiner 25 ml/100g, besonders bevorzugt kleiner 20 ml/100g, besitzen.

Der Kaliumgehalt des Rußes, gemessen am Pulverruß, kann größer 5 µg/g, vorzugsweise größer 10 µg/g, besonders bevorzugt größer 50 µg/g, sein. Das Kalium kann im ganzen Rußteilchen statistisch verteilt sein.

Die BET-Oberfläche des Rußes kann 50 m²/g bis 500 m²/g, vorzugsweise 100 m²/g bis 400 m²/g, sein.

Der erfindungsgemäße Ruß kann unbehandelt oder nachbehandelt sein, zum Beispiel oxidiert, funktionalisiert oder verperlt.

Ein weiterer Gegenstand der Erfindung ist ein Verfahren zur Herstellung des erfindungsgemäßen Rußes, welches dadurch gekennzeichnet ist, daß man eine Salzlösung mit einem Gas, vorzugsweise Luft, Stickstoff, Wasserstoff und/oder Kohlenwasserstoff, in ein Aerosol überführt, in einer Heizstrecke den Aerosolnebel soweit aufheizt, daß die Salzlösung nicht mehr kondensiert und anschließend in die Rußbildungszone einbringt.

Das Aerosol kann in den Rußrohstoff vor dem Brenner eingemischt werden. Insbesondere kann bei dem Gasrußverfahren das Aerosol in das Traggas/Öldampfgemisch vor dem Brenner eingemischt werden.

Die Salzlösung kann eine Lösung von Salz in Wasser, Alkohol oder Öl sein.

Die Salzlösung kann aus jedem Salz bestehen, das sich in Wasser, Alkohol oder Öl löst und sich in ein Aerosol überführen läßt. Dies kann zum Beispiel eine Alkali- oder Erdalkalisalzlösung, bevorzugt Kaliumsalzlösung , besonders bevorzugt eine Kaliumcarbonatlösung, sein.

Das Aerosol kann hergestellt werden, indem man eine Salzlösung mit einer Zerstäuberdüse durch Düsenluft verdüst und den sich bildenden Aerosolnebel durch Seitenluft aus dem Zerstäubungsgefäß in eine Heizstrecke befördert.

Die Zerstäuberdüse kann aus zwei aufeinander gerichteten Düsen, durch die die Flüssigkeit zusammen mit der Düsenluft geführt wird, bestehen.

Die im Zerstäubungsgefäß nicht ins Aerosol überführte Salzlösung kann aus dem Zerstäubungsgefäß nach unten in einen Rücklaufbehälter gelangen.

Die Temperatur der Heizstrecke kann 50°C bis 400°C betragen. Die Vorrichtung zur Herstellung des Aerosols kann aus Glas, Keramik oder Edelstahl bestehen.

Die erfindungsgemäßen Ruße können zur Herstellung von Tinten, Farben, Lacken, Druckfarben und Ink-Jet Tinten, sowie zur Einfärbung von Kunststoffen verwendet werden.

Die erfindungsgemässen Ruße weisen die Vorteile auf, dass die Struktur abgesenkt ist und sie im Lack eine niedrige Viskosität und höhere Farbtiefe besitzen. Sie ermöglichen auch höhere Rußkonzentrationen in Bindemittelsystemen im Vergleich zu nicht strukturabgesenkten Rußen bei gleichbleibender Viskosität.

### Beispiel:

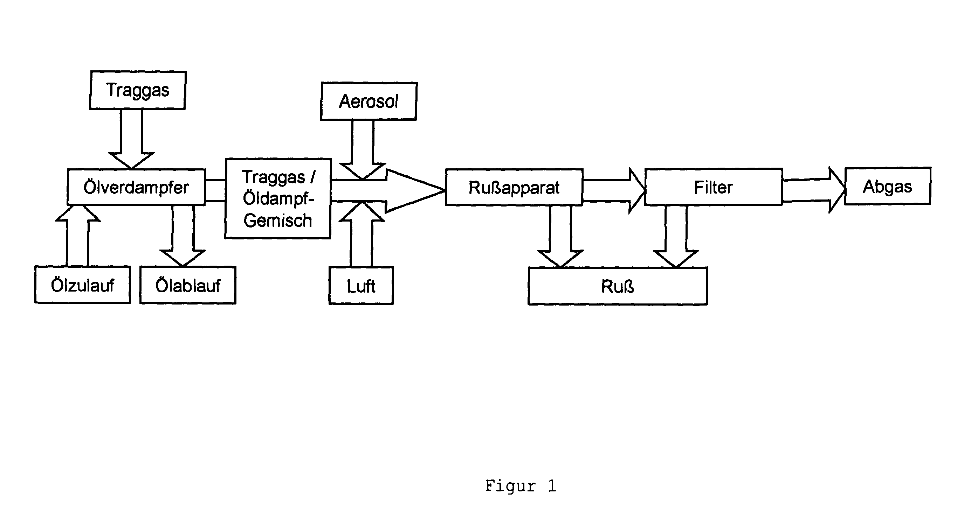

Figur 1 zeigt den schematischen Aufbau der Versuchsanlage.

In einem handelsüblichen Dünnschichtverdampfer wird Rußrohstoff I GN der Firma Rütgers Chemicals AG bei den in der Tabelle 1 angegebenen Temperaturen verdampft. Der Öldampf wird von dem in der Tabelle 1 angegebenen Wasserstoffgasstrom zu einem Gasrußapparat geführt. Unmittelbar vor dem Brenner (DE-PS 671739) werden dem Gas die in der Tabelle angegebenen Luft- und Aerosolmengen zugemischt und den Flammen zugeführt. Das Aerosol wird in einer Apparatur (DE 19650500) erzeugt, die aus einem Verdüsbereich und einer Heizstrecke besteht. Im Verdüsbereich führt man Kaliumcarbonatlösung mit in der Tabelle angebenen Konzentrationen zwei aufeinandergerichteten Düsen zu, die mit Hilfe der Düsenluft einen feinen Nebel erzeugen. Kondensierte Lösung fließt aus der Apparatur ab. Der Nebel wird mit der Transportluft in die Heizstrecke geführt und dort bei 180 °C stabilisiert. Der erzeugte Ruß wird in handelsüblichen Filteranlagen abgeschieden. Der Perlruß wird aus dem Pulverruß in handelsüblichen Perlaggregaten hergestellt.

In Tabelle 1 sind die Herstellbedingungen und Ergebnisse der Beipiele 1-4 aufgeführt.

**Tabelle 1:**

| **Beispiel** | 1 Vergleichsbeispiel | 2 | 3 | 4 |
|---|---|---|---|---|
| Pottaschekonzentration in g/L | - | 3,0 | 10,0 | 50,0 |
| Volumenstrom Wasserstoff in m³/h | 4,0 | 4,0 | 4,0 | 4,0 |
| Öldampfmenge in kg/h | 5,8 | 5,8 | 5,7 | 5,6 |
| Verdampfungstemperatur in °C | 268,7 | 268,7 | 269,6 | 269,5 |
| Volumenstrom Luft in m³/h | 19,0 | 17,0 | 17,0 | 17,0 |
| Lufttemperatur in °C | 298 | 280 | 291 | 294 |
| Volumenstrom Luft für die Verdüsung in m³/h | 0,0 | 0,5 | 0,5 | 0,5 |
| Volumenstrom Luft für Transport des Aerosols in m³/h | 0,0 | 1,5 | 1,5 | 1,5 |
| Massenstrom Additivlösung in g/h | 0,0 | 100,0 | 100,0 | 100,0 |
| Temperatur der Heizstrecke der Aerosolanlage in °C | - | 180,0 | 180,0 | 180,0 |
| | | | | |

| **Pulverruß** | | | | |
|---|---|---|---|---|
| Kaliumgehalt in µg/g | <1 | 37 | 102 | 390 |
| BET in m²/g | 148,5 | 155,3 | 152,7 | 154,5 |
| STSA in m²/g | 127,6 | 131 | 134,1 | 138,3 |
| Transmission in % | 91,9 | 94,6 | 93,6 | 92,7 |
| Ölbedarf in g/100g | 651 | 595 | 577 | 558 |
| OAN in ml/100g | 146 | 132,0 | 101,1 | 101,1 |
| Viskosität bei 80 s⁻¹ in mPas | 197 | 159 | 119 | 119 |
| Viskosität bei 800 s⁻¹ in mPas | 107 | 85 | 70 | 65 |
| Farbtiefe My | 268,2 | 270,5 | 273,4 | 275,8 |
| Farbton dM | 8,8 | 9,2 | 10 | 10,3 |
| | | | | |

| **Perlruß** | | | | |
|---|---|---|---|---|
| BET in m²/g | 147,6 | 151,8 | 150,1 | 152,5 |
| STSA in m²/g | 133,8 | 138,5 | 192,6 | 147,6 |
| OAN in ml/100g | 128 | 119,7 | 92,3 | 90,7 |
| COAN in ml/100g | 94,1 | 87,3 | 77,8 | 72,1 |
| Viskosität bei 80 s⁻¹ in mPas | 79 | 60 | 51 | 40 |
| Viskosität bei 800 s⁻¹ in mPas | 52 | 48 | 39 | 37 |
| Farbtiefe My | 267,8 | 268,5 | 270,7 | 270,8 |
| Farbton dM | 9,5 | 8,5 | 8,3 | 8,6 |

### Prüfmethoden:

### Kaliumgehalt:

Exakt 2 g Probe werden in einen sauberen Platintiegel eingewogen. Über Nacht wird die Probe bei 600 °C in einem Muffelofen eingeäschert. Die Rückstände werden in 5 ml warmer Salzsäure (30 %, hohe Reinheit) gelöst und mit hochreinem Wasser auf 50 ml aufgefüllt. Der Kaliumgehalt der Lösung wird mittels Atomabsorptionsspektrometrie (AAS) bestimmt.

| | |
|---|---|
| BET | ASTM D 4820 |
| STSA | ASTM D 5816 |
| Transmission | ASTM D 1618 |
| OAN | ASTM D 2414, jedoch mit 15 g Rußeinwaage und Paraffinöl |
| COAN | ASTM D 3493, jedoch mit 15 g Rußeinwaage und Paraffinöl |

### Ölbedarf:

Die Rußprobe wird 1 Stunde lang bei 115°C getrocknet. Anschließend wird die Probe ca. 30 Minuten lang im Exsikkator abgekühlt. Bei geperlten Rußen muss der Ruß vor der Ölzugabe mit dem Stahlspatel zerkleinert werden, damit man eine ebenso homogene Paste wie für die pulverförmige Ruße erhält.

Der Ölbedarf wird bestimmt durch Zutropfen von Leinölfirnis nach DIN 55 932, (Firma Alberdingk, Krefeld), aus einer 2 ml-Bürette zu 0,5 g Ruß und Anreiben mit einem elastischen Stahlspatel. Der Endpunkt der Ölzugabe ist erreicht, wenn sich eine homogene stehende Paste gebildet hat. Eine homogene stehende Paste liegt dann vor, wenn beim Ausziehen der Paste eine kegelförmige Spitze entsteht und diese kegelförmige Spitze durch einen leichten Schlag gegen die Glasplatte umknickt, jedoch noch nicht in sich zusammenfällt oder zerfließt.

Die Auswertung erfolgt nach DIN EN ISO 787-5 (Formel 2).

Herstellung des Schwarzlackes und Messung der Viskosität: Zur Herstellung des Reibgutes werden 45,8 g Wasser vorgelegt und folgende Komponenten in der angegebenen Reihenfolge mit dem Spatel eingerührt:

| | |
|---|---|
| Tego® Dispers 750 W, 40%-ig | 23,4 g |
| Tego® Dispers 760 W, 35%-ig | 6,6 g |
| Tego® Foamex | 0,3 g |
| AMP 90 | 0,5 g |
| Ruß | 12 g |

Gegebenfalls ist der pH-Wert durch Zugabe von weiterem AMP 90 auf 8,5 bis 9 einzustellen. Die Vordispergierung des Reibgutes erfolgt mit einem Labordissolver (Pendraulik LR 34) bei 4000 U/min für 5 min mit einem Scheibendurchmesser von 40 mm. Nach erfolgter Vordispergierung ist abermals der pH Wert zu überprüfen und gegebenenfalls mit AMP auf den Sollwert einzustellen. Die Dispergierung erfolgt in einem Skandex Disperser (BA-S 20) mit 540 g Chromanitstahlperlen (Durchmesser 3 mm) für die Dauer von 60 min bei Kühlstufe 2. Der pH Wert ist wiederum zu kontrollieren und gegebenenfalls mit AMP auf den Sollwert zu bringen.

In Anlehnung an DIN 54453 und DIN 53019 wird am Reibgut die Viskosität bei unterschiedlichen Schergefällen mit dem Rotationsviskosimeter (Visco-Tester 550, mit PK 100 Platte/Kegel 1°) der Firma Haake bestimmt.

Zur Herstellung des Schwarzlackes werden 5,4 g des Reibgutes und 24,6 g einer Polyurethandispersion (Typ U 710 , Hersteller: Alberdingk Boley) mittels eines Dissolvers bei 2000 U/min für 3 min mit einem Scheibendurchmesser von 40 mm in einem 50 ml Kunststoffbehälter gemischt.

Der fertige Lack wird mit Hilfe einer Lackhantel, Spalthöhe 150 µm, auf eine Glassplatte (90 x 130 x 1 mm) aufgezogen. Nach 30-minütigem Ablüften bei Raumtemperatur wird die Lackschicht für 30 min bei 80°C im Trockenschrank nachgehärtet.

Farbtiefe My und Farbton dM werden in Anlehnung an DIN 55979 mit dem Spektralphotometer Q-Color 35 der Firma Pausch durch das Glas bestimmt.

AMP ist 2-Amino-2-methyl-1-propanol (Hersteller: Angus Chemie).
NMP ist N-Methyl-2-pyrrolidinon.
Tego® Dispers 750 W, Tego® Dispers 760 W und Tego® Foamex sind Produkte der Tego Chemie, Essen.

Im Vergleich zum Beispiel 1 (Vergleichsbeispiel) weisen die erfindungsgemäßen Beispiele 2-4 eine niedrige Struktur auf. Die Lacke mit den erfindungsgemäßen Beispielen 2-4 haben eine niedrigere Viskosität und besitzen eine höhere Farbtiefe gegenüber dem Vergleichsbeispiel 1.

In Tabelle 2 sind die Herstellbedingungen und Ergebnisse der Beipiele 5-8 aufgeführt.

**Tabelle 2:**

| **Beispiele** | **5 Vergleichsbeispiel** | **6** | **7** | **8** |
|---|---|---|---|---|
| Pottaschekonzentration in g/L | - | 3,0 | 10,0 | 50,0 |
| Volumenstrom Wasserstoff in m³/h | 4,0 | 4,0 | 4,0 | 4,0 |
| Öldampfmenge in kg/h | 3,0 | 3,0 | 2,6 | 3,0 |
| Verdampfungstemperatur in °C | 242 | 242 | 242 | 242 |
| Volumenstrom Luft in m³/h | 15,5 | 13,5 | 13,5 | 13,5 |
| Lufttemperatur in °C | 290 | 296 | 298 | 292 |
| Volumenstrom Luft für die Verdüsung in m³/h | 0,0 | 0,5 | 0,5 | 0,5 |
| Volumenstrom Luft für Transport des Aerosols in m³/h | 0,0 | 1,5 | 1,5 | 1,5 |
| Massenstrom Additivlösung in g/h | 0,0 | 100,0 | 100,0 | 100,0 |
| Temperatur der Heizstrecke der Aerosolanlage in °C | - | 180,0 | 180,0 | 180,0 |
| | | | | |

| **Pulverruß** | | | | |
|---|---|---|---|---|
| Kaliumgehalt / µg/g | 1,3 | 124 | 500 | 1700 |
| BET in m²/g | 269,45 | 268, 6 | 310,6 | 324,2 |
| STSA in m²/g | 199,65 | 202 | 232,5 | 243,1 |
| Transmission in % | 97,8 | 96,9 | 96,4 | 95,6 |
| Ölbedarf in g/100g | 800 | 837 | 641,7 | 800 |
| OAN in ml/100g | 173,6 | 134,4 | 130 | 121,2 |
| Viskosität bei 80 s⁻¹ in mPas | 179 | 165 | 119 | 119 |
| Viskosität bei 800 s⁻¹ in mPas | 98 | 76 | 72 | 59 |
| Farbtiefe My | 295,6 | 304 | 313,7 | 317,4 |
| Farbton dM | 8,7 | 10,3 | 10,2 | 10,7 |
| | | | | |

| **Perlruß** | | | | |
|---|---|---|---|---|
| BET in m²/g | 244,9 | 286,9 | 308 | 307,3 |
| STSA in m²/g | 201,2 | 236,5 | 267,2 | 275,8 |
| OAN in ml/100g | 140 | 112,9 | 93,4 | 82,9 |
| COAN in ml/100g | 95,2 | 83,7 | 79,8 | 63,2 |
| Viskosität bei 80 s⁻¹ in mPas | 60 | 40 | 20 | 20 |
| Viskosität bei 800 s⁻¹ in mPas | 30 | 28 | 22 | 20 |
| Farbtiefe My | 295,1 | 300 | 305,8 | 310,6 |
| Farbton dM | 10,5 | 9,4 | 8,8 | 9,1 |

Im Vergleich zum Beispiel 5 (Vergleichsbeispiel) weisen die erfindungsgemäßen Beispiele 6-8 eine niedrige Struktur auf. Die Lacke mit den erfindungsgemäßen Beispielen 6-8 haben eine niedrigere Viskosität und besitzen eine höhere Farbtiefe gegenüber dem Vergleichsbeispiel 5.

## Patentansprüche

1. Gasruß oder Channelruß,
**dadurch gekennzeichnet, daß** die OAN, gemessen am geperlten Ruß, kleiner 100 ml/100g ist.

2. Gasruß oder Channelruß
gemäß Anspruch 1, **dadurch gekennzeichnet, daß** die COAN, gemessen am geperlten Ruß, kleiner 90 ml/100g ist.

3. Verfahren zur Herstellung von Ruß nach Anspruch 1 und 2, **dadurch gekennzeichnet, daß** man eine Salzlösung mit einem Gas in ein Aerosol überführt, in einer Heizstrecke den Aerosolnebel soweit aufheizt,
daß die Salzlösung nicht mehr kondensiert
und anschließend in
die Rußbildungszone einbringt.

4. Verwendung des Rußes gemäß Anspruch 1 und 2 in Tinten, Farben, Lacken, Druckfarben und Ink-Jet Tinten, sowie zur Einfärbung von Kunststoffen.

## Claims

1. Gas black or channel black, **characterized in that** the OAN, measured on the beaded carbon black, is less than 100 ml/100g.

2. Gas black or channel black according to claim 1, **characterized in that** the COAN, measured on the beaded carbon black, is less than 90 ml/100g.

3. A process for the preparation of carbon black as claimed in claim 1 and 2, **characterized in that** a salt solution is converted into an aerosol with a gas, the aerosol mist is heated up to the extent that the salt solution no longer condenses and then is introduced into the carbon black formation zone.

4. The use of the carbon black as claimed in claim 1 and 2 in inks, paints, lacquers, printing inks and ink-jet inks, and for coloring plastics.

## Revendications

1. Noir de fumée ou noir de conduit,
**caractérisé en ce que** la valeur OAN mesurée sur le noir de carbone perlé est inférieure à 100 ml/100 g.

2. Noir de fumée ou noir de conduit selon la revendication 1, **caractérisé en ce que** la valeur COAN mesurée sur le noir de carbone perlé est inférieure à 90 ml/ 100 g.

3. Procédé servant à fabriquer du noir de carbone selon la revendication 1 et la revendication 2, **caractérisé en ce qu'**on transforme une solution salée avec un gaz en un aérosol, on chauffe, sur un tronçon de chauffage, le brouillard d'aérosol jusqu'à ce que la solution de sel ne se condense plus, et on l'introduit immédiatement après dans la zone de formation de noir de carbone.

4. Utilisation du noir de carbone selon la revendication 1 et 2 dans des encres, des couleurs, des vernis, des encres d'impression et des encres à jet d'encre, ainsi qu'aux fins de la coloration de matières plastiques.
